# EUROPÄISCHE PATENTSCHRIFT

(11) **EP 2 538 416 B1**
(45) Veröffentlichungstag und Bekanntmachung des Hinweises auf die Patenterteilung: **30.08.2017**
(21) Anmeldenummer: 11171302.0
(22) Anmeldetag: 24.06.2011
(51) Int. Cl.: H01B 3/46, C08L 15/00, C08L 83/04, E04B 1/62, E04B 1/76

(54) **Isolationsmaterial**
Insulation material
Matériau d'isolation

(43) Veröffentlichungstag der Anmeldung: 26.12.2012
(73) Patentinhaber: ContiTech Elastomer-Beschichtungen GmbH, 30165 Hannover (DE)
(72) Erfinder: Storre, Jens, 37176 Nörten Hardenberg (DE); Fleck, Andreas, 30827 Garbsen (DE); Paulsen, Hans-Peter, 37079 Göttingen (DE); Papadimitriou, Alexander, 37154 Northeim (DE); Luther, Sabine, 30519 Hannover (DE)
(74) Vertreter: Finger, Karsten

(56) Entgegenhaltungen:
- EP-A2- 1 266 948
- US-A1- 2009 139 181

## Beschreibung

Die Erfindung betrifft ein flexibles Isolationsmaterial auf der Basis einer hochtemperaturbeständigen Kautschukmischung.

Für die thermische und/oder akustische Isolation von Bauteilen, insbesondere von Bauteilen mit komplexen Geometrien, sind nur wenige Lösungen auf dem Markt erhältlich, die auch bei Temperaturen von mehr als 130 °C, insbesondere von mehr als 150 °C, einsetzbar sind. Üblicherweise werden zur Isolation von Bauteilen bei diesen hohen Temperaturen Mineralwollen eingesetzt, die zusätzlich mit einer Blech- oder Klebbandkaschierung versehen und damit stabilisiert werden. Derartige Isolationsmaterialien aus Mineralwolle mit Kaschierungen weisen folgende Nachteile auf: Die Montage bzw. Aufbringung auf das zu isolierende Bauteil und die Fixierung ist umständlich und daher teuer. Komplexe Bauteile (Formstücke) lassen sich auf Grund der geringen Flexibilität der Mineralwolle mit der notwendigen Kaschierung (Ummantelung) nur sehr schwer isolieren. Mineralwollen sind saugfähig, was bei Austritt von oder versehentlicher Benetzung mit Flüssigkeiten oder Bildung von Kondensat unter Umständen zum Verlust der Isolierwirkung und bei brennbaren Flüssigkeiten, wie z. B. Ölen, sogar zur Selbstentzündung führen kann. Bei der Aufbringung der Mineralwolle auf das zu isolierende Bauteil können außerdem Fasern und/oder Faserstaub frei werden, die bei längerer Exposition zu Krankheiten in den Atmungsorganen führen können.

Alternative Isolationsmaterialien auf der Basis von Polymeren, wie z. B. selbstblähende Dichtbänder oder vorgeformte Isolationsmaterialien auf der Basis von EPDM mit geschlossener Zellstruktur, sind in der Regel in ihrer Einsatztemperatur auf Bereiche von maximal 130 °C bzw. 150 bis 160 °C begrenzt.

In der GB 2 249 753 A wird ein flexibles, bahnenförmiges Material zur Wärmeisolierung z. B. von Schläuchen bei extrem hohen Temperaturen beschrieben, welches eine Lage aus einem ggf. geschäumten Silikonkautschuk und eine Metallfolie aufweist. Weitere Gewebelagen können vorgesehen werden. Die Silikonkautschuklage wird vor der Aufbringung auf das zu isolierende Bauteil stets vernetzt. Dabei wird die Kautschuklage üblicherweise als Paste oder Lösung aufgebracht, getrocknet und anschließend vernetzt. Durch die vorherige Vernetzung weist das Material in der Regel keine plastische Verformbarkeit mehr auf, da die Vernetzung (Vulkanisation) der Übergang des Elastomers vom plastischen in den elastischen Zustand bewirkt. Das Material kann sich daher nicht optimal an sehr komplexe Bauteilgeometrien anpassen und die gewünschte Position oft nicht beibehalten.

Bahnenförmiges, flexibles Isolationsmaterial bietet auch bei plastischer Verformbarkeit oft den Nachteil, dass Hinterschnitte an komplexen Bauteilen, wie Armaturen oder Ventilen, beim Aufwickeln des bahnenförmigen Materials nicht mit dem Isolationsmaterial ausgefüllt werden.

Der Erfindung liegt daher die Aufgabe zu Grunde, ein Isolationsmaterial für die Anwendung bei Temperaturen von mehr als 130 °C zur Verfügung zu stellen, welches sich einfach auf zu isolierende, komplexe Bauteile aufbringen lässt und auch Hinterschnitte ausfüllt.

Gelöst wird diese Aufgabe erfindungsgemäß dadurch, dass die Kautschukmischung gemäß Anspruch 1 zumindest teilweise unvernetzt und plastisch verformbar ist und eine Mooney-Viskosität ML(1+4) bei 23 °C bestimmt gemäß DIN 53523 Teil 3 von 5 bis 20 ME aufweist.

Unter "teilweise unvernetzt" ist dabei sowohl eine Kautschukmischung zu verstehen, die noch nicht verbrauchte Vernetzungschemikalien enthält, als auch eine Kautschukmischung, die mit wenig oder gar keinen Vernetzungschemikalien vernetzt ist, aber noch zumindest vernetzbare Polymerbestandteile aufweist.

Durch die plastische Verformbarkeit mit niedriger Mooney-Viskosität ML(1+4) bei 23 °C von 5 bis 20 ME gelingt es, auch komplizierte und komplexe Bauteilgeometrien, wie z. B. Ventile, Wärmetauscher oder Rohrleitungssysteme, vollständig mit dem Isolationsmaterial zu umhüllen und auch Hinterschnitte auszufüllen. Das Isolationsmaterial kann dabei wegen der niedrigen Viskosität einfach maschinell oder sogar kostengünstig per Hand auf das zu isolierende Bauteil gedrückt bzw. gepresst werden. Es lässt sich wie Knete bei Raumtemperatur verarbeiten und bietet eine einfache und schnelle Möglichkeit komplexe Bauteile von Hand haltbar zu isolieren. Das Isolationsmaterial kann auch in kleinste Öffnungen und Hinterschnitte hineingedrückt werden.

Zusätzlich bietet ein derartiges Isolationsmaterial die Vorteile, dass es nicht saugfähig wie z. B. Mineralwolle ist und bei seiner Aufbringung keine gesundheitsgefährdenden Mineralfasern oder Faserstäube freigesetzt werden.

Der Einsatzbereich bei hohen Temperaturen wird durch die Verwendung einer hochtemperaturbeständigen Kautschukmischung gewährleistet.

Das Isolationsmaterial dient dann zur Reduzierung von Wärmeverlusten, als Verbrennungsschutz bei Berührung oder auch zur Schalldämmung. Auch zur elektrischen Isolierung, sogar in flammhemmender Ausführung, kann das Isolationsmaterial verwendet werden.

Das auf das zu isolierende Bauteil aufgebrachte Isolationsmaterial, enthaltend die zumindest teilweise unvernetzte und plastisch verformbare Kautschukmischung, kann nach der Aufbringung durch Einwirkung von Temperatur und/oder Strahlung vernetzt bzw. weiter vernetzt werden. Das Isolationsmaterial ist nach der Aufbringung also noch vernetzbar. Bei der Strahlung kann es sich um IR-Strahlung, Mikrowellen oder sonstige energiereiche Strahlung handeln. Die Einwirkung von Temperatur kann beispielsweise durch das Erwärmen mit heißer Luft durch einen Föhn erfolgen. Besonders einfach und schnell lässt sich aber dadurch vernetzen, dass die Temperatureinwirkung durch das zu isolierende Bauteil erfolgt. Durch die Eigenwärme des zu isolierenden Bauteils wird vernetzt.

Durch die nachträgliche Vernetzung wird das Isolationsmaterial langzeitstabil in seiner Position fixiert, da die Kautschukmischung bei der Vernetzung vom plastischen in den elastischen Zustand übergeht. Man erhält ein elastomeres Isolationsbauteil, welches auch nach der Demontage an gleicher Stelle oder an anderer Stelle bei einem gleich ausgebildeten, zu isolierenden Bauteil wiederverwendet werden kann.

Gemäß einer vorteilhaften Weiterbildung der Erfindung weist die Kautschukmischung bei der Aufbringung des Isolationsmaterials auf die zu isolierenden Bauteile eine so hohe Klebrigkeit auf, dass die Rückstellkräfte des Isolationsmaterials nicht zu einer Ablösung des Materials von der Bauteiloberfläche führen. Das Isolationsmaterial bleibt durch seine Klebrigkeit dann an der zu isolierenden Oberfläche und auch an sich selbst haften und gewährleistet eine einfache Fixierung in der gewünschten Position.

Um die thermischen oder auch akustischen Isolationseigenschaften zu verbessern, weist die Kautschukmischung eine Porenstruktur auf. Diese Porenstruktur erfolgt durch den Einsatz von Mikrokugeln die in die Kautschukmischung eingemischt sind. Bei den Mikrokugeln handelt es sich um hohle Kugeln (Mikrosphären) mit einem Durchmesser im µm-Bereich aus Glas, Phenolharz, Kohlenstoff oder thermoplastischem Kunststoffmaterial. Teilweise gibt es sie in expandierbarer Form, wobei sie mit einem Treibmittel gefüllt sind und sich beim Erwärmen ausdehnen, oder in vorexpandierter Form; die Ausdehnung ist hier schon abgeschlossen. Derartige Mikrokugeln werden z. B. unter dem Namen Expancel^{®} von der Firma Akzo Nobel vertrieben.

Zur Bildung einer Porenstruktur mit besonders guten Isolationseigenschaften werden der Kautschukmischung 2 bis 100 phr Mikrokugeln zugesetzt. Mikrokugeln bieten den Vorteil der Bildung einer geschlossenen Porenstruktur, die für Isolationszwecke wegen geringerer Konvektion in den Poren besser geeignet ist. Je höher die Menge an expandierten Mikrokugeln, desto besser wird durch den höheren Porenanteil die Isolationswirkung. Bei zu großen Mengen an Mikrokugeln können sich jedoch verarbeitungstechnische Probleme bei der Mischungsherstellung oder -verarbeitung ergeben. Das Isolationsmaterial verliert an Festigkeit, was beim Aufbringen auf die zu isolierenden Bauteile von Nachteil ist.

Vorzugsweise enthält die Kautschukmischung des Isolationsmaterials 2 bis 15 phr expandierte Mikrokugeln aus thermoplastischem Material. Diese Mikrokugeln sind sehr leicht und bewirken schon in dieser Dosierung die Bildung einer ausreichenden Porenstruktur, ohne dass die Verformbarkeit und die Klebrigkeit der Kautschukmischung negativ beeinflusst werden.

Gemäß einer alternativen Ausführungsform enthält die Kautschukmischung 10 bis 100 phr Mikrokugeln aus Glas. Mit dieser Variante lässt sich ein Isolationsmaterial mit höherer Standfestigkeit und geringerer Kompressibilität erhalten, da sich Mikrokugeln aus Glas im Gegensatz zu Mikrokugeln aus thermoplastischem Material nicht komprimieren lassen.

Das Isolationsmaterial basiert auf einer hochtemperaturbeständigen Kautschukmischung. Als Kautschuke können dabei z. B. Silikonkautschuk, hydrierter Nitrilkautschuk (HNBR), Fluorkautschuk, Acrylatkautschuk, Ethylen-Acrylat-Co- und Terpolymere, Ethylen-Propylen-Dienkautschuk, Epichlorhydrinkautschuk und Verschnitte aus diesen eingesetzt werden. Vorzugsweise basiert die Kautschukmischung auf Silikonkautschuk, da dieser Kautschuk eine besonders hohe Temperaturbeständigkeit, plastische Verformbarkeit und eine gewisse Klebrigkeit aufweist. Bevorzugt werden HTV-Typen, die sowohl peroxidisch vernetzbar als auch additionsvernetzbar sein können. Der Silikonkautschuk kann auch als Vormischung aus Polymer, Füllstoff und Öl, wie auf dem Markt üblich, eingesetzt werden.

Um die Viskosität der auf Silikonkautschuk basierenden Kautschukmischung positiv zu beeinflussen, enthält die Kautschukmischung vorzugsweise zumindest 10 phr Silikonöl.

Dies ist gut mit dem Silikonkautschuk verträglich und ermöglicht die Einstellung einer kneteartigen Konsistenz mit manueller Verformbarkeit. Die Kautschukmischung des Isolationsmaterials enthält eine Schwarzpigmentpräparation. Es hat sich überraschenderweise herausgestellt, dass durch eine solche Schwarzpigmentpräparation die Klebrigkeit des Materials erhöht werden kann. Bei den Schwarzpigmenten kann es sich z. B. um Ruß, Eisenoxid oder Gemischen daraus handeln. Als Schwarzpigmentpräparationen können beispielsweise Elastosil^{®} Farbpasten, wie Elastosil® Farbpaste PT Schwarz Standard, Elastosil® Farbpaste Tiefschwarz RAL 9005, etc. oder auch Elastosil® Stabilisator H3, der Firma Wacker Chemie AG, Deutschland eingesetzt werden.

Zur Verbesserung des Flammschutzes enthält die Kautschukmischung des Isolationsmaterials ein Flammschutzmittel. Auch für die Flammschutzmittel wurde überraschenderweise gefunden, dass sie die Klebrigkeit des Materials erhöhen.

Das erfindungsgemäße Isolationsmaterial lässt sich nach dem Fachmann bekannten Verfahren herstellen, wobei eine Kautschukmischung mit allen benötigten Zuschlagstoffen erzeugt wird und die Mischung im Anschluss portioniert wird. Das Isolationsmaterial kann in unterschiedlichsten Formen angeboten werden, z. B. in Form von Kugeln, Strängen, Streifen, Bahnen oder Bändern.

Anhand eines Ausführungsbeispiels soll die Erfindung näher erläutert werden, ohne dabei auf dieses beschränkt zu sein.

Es wurde eine auf Silikonkautschuk basierende Kautschukmischung 1 mit der in Tabelle 1 dargestellten Zusammensetzung hergestellt. Eine Spalte der Tabelle gibt die möglichen Mengenbereiche für ein erfindungsgemäßes Isolationsmaterial auf der Basis von Silikonkautschuk an. Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Ferner wurde die Mooney-Viskosität der Mischung gemäß DIN 53523 Teil 3 bei 23 °C nach 7 Tagen gemessen. Als Vergleich ist in der Tabelle 1 eine Silikonkautschukmischung 2 aufgeführt, die nicht die erforderliche Mooney-Viskosität aufweist und daher eine Ausfüllung von Hinterschnitten durch manuelle Aufbringung des Materials nicht ermöglicht.

**Tabelle 1**

| Substanz | Mischung 1 | mögliche Mengenbereiche | Vergleichsmischung 2 |
|---|---|---|---|
| Silikonkautschuk^{a} | 100 | 100 | 100 |
| Hitzestabilisatoren | 0,56 | 0-6 | 1,95 |
| Flammschutzmittel^{b} | 2,41 | 0-6 | - |
| Verarbeitungshilfsmittel | 0,74 | 0-3 | 0,3 |
| Peroxidvernetzer | 2,04 | 1-4 | 1,05 |
| Silikonöl | 12,99 | 2-20 | 9,30 |
| vorexpandierte Mikrokugeln^{c} | 5,57 | 2-15 | 5,58 |
| expandierbare Mikrokugeln^{d} | - | - | 1,5 |
| Pigmentpräparation^{e} | 9,28 | 0-12 | - |
| Mooney-Viskosität ML(1+4) bei 23 °C | 7 ME | 5 - 20 ME | > 25 ME |

| | | | |
|---|---|---|---|
| ^{a} Elastosil^{®} R 401/30 S, Wacker Chemie AG, Deutschland für Mischung 1, Elastosil^{®} R 420/50 S, Wacker Chemie AG, Deutschland für Mischung 2 ^{b} Elastosil^{®} Aux Batch SB2, Wacker Chemie AG, Deutschland ^{c} Expancel^{®} 920 DE 40 d30, Akzo Nobel N. V., Niederlande ^{d} Expancel^{®} 920 DU 80, Akzo Nobel N. V., Niederlande ^{e} Elastosil^{®} Farbpaste PT Schwarz Standard, Wacker Chemie AG, Deutschland | | | |

Das erfindungsgemäße Isolationsmaterial der Mischung 1 zeichnet sich durch eine gleichmäßige geschlossene Porenstruktur durch die Verwendung der vorexpandierten Mikrokugeln aus. Es zeigt eine Wärmeleitfähigkeit von ≤ 0,1 W/(m*K) und weist daher gute Isolationseigenschaften auf.

Das erfindungsgemäße Isolationsmaterial ließ sich, im Gegensatz zu der Vergleichsmischung 2, wie Knete bei Raumtemperatur verarbeiten und komplexe Bauteile mit Hinterschnitten, kleinen Öffnungen oder Spalten konnten von Hand mit dem Isolationsmaterial vollumfänglich versehen werden, so dass eine maximale Isolation erzielt werden konnte. Auf Grund der Klebrigkeit haftete es gut an den einzelnen Bauteilen. Das Isolationsmaterial der Mischung 1 bietet eine hervorragende thermische und akustische Isolation auch bei Temperaturen von mehr als 130 °C. Es wurden diverse Rohrleitungen, Flansche und Ventile, die von Medien bis 200 °C durchströmt wurden, manuell mit der Mischung 1 isoliert. Die durch die Wärme des durchströmenden Mediums vulkanisierte Isolationsmischung konnte abgenommen und erneut mit gleicher Isolationswirkung wieder angebracht werden.

## Patentansprüche

1. Flexibles Isolationsmaterial auf der Basis einer hochtemperaturbeständigen Kautschukmischung,
**dadurch gekennzeichnet, dass** die Kautschukmischung zumindest teilweise unvernetzt und plastisch verformbar ist und eine Mooney-Viskosität ML(1+4) bei 23°C bestimmt gemäß DIN 53523 Teil 3 von 5 bis 20 ME aufweist und eine Porenstruktur aufweist und 2 bis 100 phr Mikrokugeln zur Bildung der Porenstruktur und eine Schwarzpigmentpräparation und ein Flammschutzmittel enthält.

2. Isolationsmaterial nach Anspruch 1, **dadurch gekennzeichnet, dass** die Kautschukmischung bei der Aufbringung des Isolationsmaterials auf die zu isolierenden Bauteile eine so hohe Klebrigkeit aufweist, dass die Rückstellkräfte des Isolationsmaterials nicht zu einer Ablösung des Materials von der Bauteiloberfläche führen.

3. Isolationsmaterial nach Anspruch 1, **dadurch gekennzeichnet, dass** die Kautschukmischung 2 bis 15 phr expandierte Mikrokugeln aus thermoplastischem Kunststoffmaterial zur Bildung der Porenstruktur enthält.

4. Isolationsmaterial nach Anspruch 1, **dadurch gekennzeichnet, dass** die Kautschukmischung 10 bis 100 phr Mikrokugeln aus Glas zur Bildung der Porenstruktur enthält.

5. Isolationsmaterial nach zumindest einem der vorhergehenden Ansprüche, **dadurch gekennzeichnet, dass** die Kautschukmischung auf Silikonkautschuk basiert.

6. Isolationsmaterial nach Anspruch 5, **dadurch gekennzeichnet, dass** die Kautschukmischung zumindest 10 phr Silikonöl enthält.

## Claims

1. Flexible insulating material based on a rubber mixture having high temperature resistance, **characterized in that** the rubber mixture is at least to some extent uncrosslinked and plastically deformable, and has a Mooney viscosity ML(1+4) of from 5 to 20 MU at 23°C, determined in accordance with DIN 53523 Part 3, and has a pore structure and comprises from 2 to 100 phr of microspheres in order to form the pore structure, and comprises a black pigment preparation and a flame retardant.

2. Insulating material according to Claim 1, **characterized in that** on application of the insulating material to the components requiring insulation the adhesion of the rubber mixture is sufficiently high to prevent any separation of the material from the component surface due to the resilience of the insulating material.

3. Insulating material according to Claim 1, **characterized in that** the rubber mixture comprises from 2 to 15 phr of expanded microspheres made of thermoplastic material in order to form the pore structure.

4. Insulating material according to Claim 1, **characterized in that** the rubber mixture comprises from 10 to 100 phr of microspheres made of glass in order to form the pore structure.

5. Insulating material according to at least one of the preceding claims, **characterized in that** the rubber mixture is based on silicone rubber.

6. Insulating material according to Claim 5, **characterized in that** the rubber mixture comprises at least 10 phr of silicone oil.

## Revendications

1. Matériau d'isolation flexible à base d'un mélange de caoutchouc résistant aux températures élevées, **caractérisé en ce que** le mélange de caoutchouc est au moins partiellement non réticulé et déformable plastiquement, et présente une viscosité de Mooney ML(1+4) à 23 °C déterminée selon DIN 53523 partie 3 de 5 à 20 ME, et présente une structure poreuse, et contient 2 à 100 pce de microbilles pour la formation de la structure poreuse et une préparation de pigment noir et un agent ignifuge.

2. Matériau d'isolation selon la revendication 1, **caractérisé en ce que** le mélange de caoutchouc présente lors de l'application du matériau d'isolation sur les composants à isoler une adhésivité si élevée que les forces de rappel du matériau d'isolation ne conduisent pas à un décollement du matériau de la surface du composant.

3. Matériau d'isolation selon la revendication 1, **caractérisé en ce que** le mélange de caoutchouc contient 2 à 15 pce de microbilles expansées en matériau plastique thermoplastique pour la formation de la structure poreuse.

4. Matériau d'isolation selon la revendication 1, **caractérisé en ce que** le mélange de caoutchouc contient 10 à 100 pce de microbilles en verre pour la formation de la structure poreuse.

5. Matériau d'isolation selon au moins l'une quelconque des revendications précédentes, **caractérisé en ce que** le mélange de caoutchouc est à base d'un caoutchouc de silicone.

6. Matériau d'isolation selon la revendication 5, **caractérisé en ce que** le mélange de caoutchouc contient au moins 10 pce d'huile de silicone.
